# EUROPEAN PATENT APPLICATION

(11) **EP 4 776 747 A2**
(43) Date of publication of application: **15.07.2026**
(21) Application number: 26181325.7
(22) Date of filing: 09.03.2023
(51) Int. Cl.: H04W 76/25

(54) **NETWORK CONTROL OF SLICE USE**

(30) Priority: 11.03.2022 US 202263319169 P
(62) Divisional of application: 23713436.6
(71) Applicant: Telefonaktiebolaget LM Ericsson (publ), 164 83 Stockholm (SE)
(72) Inventor: Foti, George, Dollard Des Ormeaux, Quebec H9G 2Z8 (CA); Hedman, Peter, 252 50 HELSINGBORG (SE)
(74) Representative: Ericsson

(57) **Abstract**

Systems and methods for controlling the use of a network slice in a core network of a cellular communications system are disclosed. In one embodiment, a method comprises, at a first Network Function (NF) in a core network of a cellular communications system, sending, to a second NF associated with a first network slice, a first message that initiates transfer of one or more Protocol Data Unit (PDU) sessions of a User Equipment (UE) from the first network slice to a second network slice. The method further comprises, at the second NF, receiving the first message from the first NF and sending, toward the UE, a session management message that causes the transfer of the one or more PDU sessions of the UE from the first network slice to the second network slice.

## Description

### Related Applications

(1) This application claims the benefit of provisional patent application serial number 63/319,169, filed March 11, 2022, the disclosure of which is hereby incorporated herein by reference in its entirety.

### Technical Field

(2) The present disclosure relates to a cellular communications system and, more specifically, network slicing in a cellular communications system.

### Background

(3) In the Third Generating Partnership Project (3GPP) Fifth Generation System (5GS), network slicing is a network architecture in which multiple logical networks are virtualized on the same physical network infrastructure. Each network slice may support one or more services (e.g., an enhanced Mobile Broadband (eMBB) service, an Ultra-Reliable Low-Latency Communication (URLLC) service, etc.), each having its own service-level requirements.

(4) Network Slice Admission Control (NSAC) is defined in 3GPP Technical Specification (TS) 23.501 (see, e.g., V17.3.0) chapter 5.15.11, and Network Slice Admission Control Function (NSACF) procedures are defined in 3GPP TS 23.502 (see, e.g., V17.3.0) chapter 4.2.11. In general, NSAC is used to control the number of registered User Equipments (UEs) or the number of Protocol Data Unit (PDU) sessions per network slice. The NSACF is the Network Function (NF) that performs NSAC.

(5) A description of network slicing is available in 3GPP TS 23.501, and the Fifth Generation System (5GS) procedures are defined in 3GPP TS 23.502.

### Summary

(6) According to the independent claims, apparatuses and methods for a Session Management Function (SMF) associated with a first network slice in a core network of a cellular communications system are disclosed. Developments are set forth in the dependent claims. In one embodiment, a method performed by a Session Management Function, SMF, associated with a first network slice in a core network of a cellular communications system, is disclosed. The method further comprises receiving, from an Access and Mobility Management Function, AMF, a first message that initiates transfer of one or more Protocol Data Unit, PDU, sessions of a User Equipment, UE, from the first network slice to a second network slice, determining that Session and Service Continuity, SSC, mode 3 logic can be used by the UE;and sending toward the UE, a session management message that causes the transfer of the one or more PDU sessions of the UE from the first network slice to the second network slice. In another embodiment a method performed by a Session Management Function, SMF, associated with a first network slice in a core network of a cellular communications system is disclosed. The method further comprises receiving from an Access and Mobility Management Function, AMF, a first message that initiates transfer of one or more Protocol Data Unit, PDU, sessions of a User Equipment, UE, from the first network slice to a second network slice, sending toward the UE, a session management message wherein the session management message comprises information that indicates the second network slice and information that indicates that Session and Service Continuity, SSC, mode 3 logic can be applied. Corresponding embodiments of a network node for implementing an SMF are also disclosed. Systems and methods for controlling the use of a network slice in a core network of a cellular communications system are disclosed. In one embodiment, a method comprises, at a first Network Function (NF) in a core network of a cellular communications system, sending, to a second NF associated with a first network slice, a first message that initiates transfer of one or more Protocol Data Unit (PDU) sessions of a User Equipment (UE) from the first network slice to a second network slice. The method further comprises, at the second NF, receiving the first message from the first NF and sending, toward the UE, a session management message that causes the transfer of the one or more PDU sessions of the UE from the first network slice to the second network slice. In this manner, the network is enabled to control the use of a network slice, e.g., to alleviate congestion, to enable a network slice to be taken down (e.g., temporarily for maintenance), or the like.

(7) In one embodiment, the first message comprises information that indicates the second network slice. In one embodiment, the first message further comprises information that indicates the first network slice. In one embodiment, the first message further comprises: (a) information that indicates whether the transfer of the one or more PDU session from the first network slice to the second network slice is to be performed immediately or at a scheduled time, (b) information that indicates that Session and Service Continuity (SSC) mode 3 logic can be applied, or both (a) and (b).

(8) In one embodiment, at the second NF, sending the session management message toward the UE comprises sending a second message comprising the session management message to the first NF. The method further comprises, at the first NF, receiving the second message from the second NF and sending the session management message to the UE.

(9) In one embodiment, the method further comprises, at the UE, receiving the session management message and performing one or more actions to effect transfer of the one or more PDU sessions from the first network slice to the second network slice responsive to the session management message.

(10) In one embodiment, the first NF is an Access and Mobility Management Function (AMF), and the second NF is a Session Management Function (SMF). In one embodiment, the first message is a Nsmf_PDUSession_UpdateSMContext Request.

(11) In one embodiment, the session management message is a PDU session modification request.

(12) Embodiments of a method performed by a first NF in a core network of a cellular communications system are also disclosed. In one embodiment, a method performed by a first NF in a core network of a cellular communications system comprises sending, to a second NF associated with a first network slice, a first message that initiates transfer of one or more PDU sessions of a UE from the first network slice to a second network slice. The method further comprises receiving, from the second NF, a second message comprising a session management message that causes transfer of the one or more PDU sessions of the UE from the first network slice to the second network slice and sending the session management message to the UE.

(13) In one embodiment, the first message comprises information that indicates the second network slice. In one embodiment, the first message further comprises information that indicates the first network slice. In one embodiment, the first message further comprises: (a) information that indicates whether the transfer of the one or more PDU session from the first network slice to the second network slice is to be performed immediately or at a scheduled time, (b) information that indicates that SSC mode 3 logic can be applied, or both (a) and (b).

(14) In one embodiment, the session management message is a PDU session modification request.

(15) In one embodiment, the first NF is an AMF, and the second NF is a SMF. In one embodiment, the first message is a Nsmf_PDUSession_UpdateSMContext Request.

(16) Corresponding embodiments of a first NF and a network node for implementing a first NF are also disclosed. In one embodiment, a network node for implementing a first NF for a core network of a cellular communications system comprises processing circuitry configured to cause the network node to send, to a second NF associated with a first network slice, a first message that initiates transfer of one or more PDU sessions of a UE from the first network slice to a second network slice. The processing circuitry is further configured to cause the network node to receive, from the second NF, a second message comprising a session management message that causes transfer of the one or more PDU sessions of the UE from the first network slice to the second network slice and send the session management message to the UE.

(17) Embodiments of a method performed by a second NF associated with a first network slice in a core network of a cellular communications system are also disclosed. In one embodiment, a method performed by a second NF associated with a first network slice in a core network of a cellular communications system comprises receiving, from a first NF, a first message that initiates transfer of one or more PDU sessions of a UE from the first network slice to a second network slice and sending, toward the UE, a session management message that causes the transfer of the one or more PDU sessions of the UE from the first network slice to the second network slice.

(18) In one embodiment, the first message comprises information that indicates the second network slice. In one embodiment, the first message further comprises information that indicates the first network slice. In one embodiment, the first message further comprises: (a) information that indicates whether the transfer of the one or more PDU session from the first network slice to the second network slice is to be performed immediately or at a scheduled time, (b) information that indicates that SSC mode 3 logic can be applied, or both (a) and (b).

(19) In one embodiment, sending the session management message toward the UE comprises sending a second message comprising the session management message to the first NF.

(20) In one embodiment, the first NF is an AMF, and the second NF is a SMF. In one embodiment, the first message is a Nsmf_PDUSession_UpdateSMContext Request.

(21) In one embodiment, the session management message is a PDU session modification request.

(22) Corresponding embodiments of a second NF and a network node for implementing a second NF are also disclosed. In one embodiment, a network node for implementing a second NF associated with a first network slice in a core network of a cellular communications system comprises processing circuitry configured to cause the network node to receive, from a first NF, a first message that initiates transfer of one or more PDU sessions of a UE from the first network slice to a second network slice; and send, toward the UE, a session management message that causes the transfer of the one or more PDU sessions of the UE from the first network slice to the second network slice.

(23) Embodiments of a method performed by a UE are also disclosed. In one embodiment, a method performed by a UE comprises receiving a first message from an NF, wherein the first message initiates transfer of one or more PDU sessions of the UE from a first network slice to a second network slice and performing one or more actions to effect transfer of the one or more PDU sessions from the first network slice to the second network slice responsive to the first message.

(24) In one embodiment, the first message comprises information that indicates the second network slice. In one embodiment, the first message further comprises information that indicates the first network slice.

(25) In one embodiment, the NF is a SMF.

(26) In one embodiment, the first message is a PDU session modification request.

(27) Corresponding embodiments of a UE are also disclosed. In one embodiment, a UE comprises one or more transmitters, one or more receivers, and processing circuitry associated with the one or more transmitters and the one or more receivers. The processing circuitry is configured to cause the UE to receive a first message from a NF, wherein the first message initiates transfer of one or more PDU sessions of the UE from a first network slice to a second network slice, and perform one or more actions to effect transfer of the one or more PDU sessions from the first network slice to the second network slice responsive to the first message.

(28) In another embodiment, a method performed by a NF in a core network of a cellular communications system comprises monitoring usage of a network slice by a UE and performing one or more actions to: deregister the UE from the network slice or that cause the UE to be deregistered from the network slice, responsive to the usage of the network slice by the UE satisfying one or more predefined or preconfigured conditions for deregistration, and/or register the UE to a network slice responsive to the usage of the network slice by the UE satisfying one or more predefined or preconfigured conditions for registration.

(29) In one embodiment, performing the one or more actions comprises performing one or more actions to deregister the UE from the network slice or that cause the UE to be deregistered from the network slice, responsive to the usage of the network slice by the UE satisfying one or more predefined or preconfigured conditions for deregistration. In one embodiment, monitoring the usage of the network slice by the UE comprises monitoring whether the UE has established a PDU session on the network slice within a certain amount of time after the UE has registered with the network slice, and the one or more predefined or preconfigured conditions for deregistration comprises a condition that the UE has not established a PDU session on the network slice within the certain amount of time. In another embodiment, monitoring the usage of the network slice by the UE comprises monitoring whether a PDU session of the UE on the network slice is inactive for a certain amount of time, and the one or more predefined or preconfigured conditions for deregistration comprises a condition that the PDU session is inactive for the certain amount of time.

(30) In one embodiment, performing the one or more actions to deregister the UE from the network slice or that cause the UE to be deregistered from the network slice comprises initiating a network-initiated deregistration procedure.

(31) In one embodiment, performing the one or more actions to deregister the UE from the network slice or that cause the UE to be deregistered from the network slice comprises removing the network slice from a set of allowed network slices of the UE.

(32) In one embodiment, performing the one or more actions to deregister the UE from the network slice or that cause the UE to be deregistered from the network slice comprises removing the network slice from a set of allowed network slices of the UE using a UE Configuration Update procedure.

(33) In one embodiment, performing the one or more actions comprises performing one or more actions to register the UE to a network slice responsive to the usage of the network slice by the UE satisfying one or more predefined or preconfigured conditions for registration. In one embodiment, performing the one or more actions to register the UE to the network slice comprises adding the network slice to a set of allowed network slices for the UE in a registration accept message or UE Configuration Update message.

(34) In one embodiment, the NF is an AMF, SMF, Policy and Control Function (PCF), or Network Slice Admission Control Function (NSACF).

(35) Corresponding embodiments of a network node that implements a NF are also disclosed.

(36) In another embodiment, a method comprises, at a NF in a core network of a cellular communications system, sending, towards a UE, a UE configuration update command comprising information that indicates that a first network slice is removed or is to be removed from a set of allowed network slices for the UE and information that indicates an instruction to transfer one or more PDU sessions of the UE established on the first network slice to a second network slice. The method further comprises, at the UE, receiving the configuration update command from the NF and performing a PDU session establishment procedure with respect to the second network slice to transfer the one or more PDU sessions from the first network slice to the second network slice.

(37) In one embodiment, the UE configuration update command further comprises an indication that the UE can apply SSC mode 3 logic for the PDU Session transfer.

(38) In one embodiment, the UE configuration update command further comprises information that adds the second network slice to the set of allowed network slices of the UE.

(39) In one embodiment, the method further comprises, at the UE, sending a registration request to the second network slice whereby the target network slice is added to the set of allowed network slices of the UE.

(40) In one embodiment, a method performed by a NF in a core network of a cellular communications system comprises sending, towards a UE, a UE configuration update command comprising information that indicates that a first network slice is removed or is to be removed from a set of allowed network slices for the UE and information that indicates an instruction to transfer one or more PDU sessions of the UE established on the first network slice to a second network slice.

(41) In one embodiment, the UE configuration update command further comprises an indication that the UE can apply SSC mode 3 logic for the PDU Session transfer.

(42) In one embodiment, the UE configuration update command further comprises information that adds the second network slice to the set of allowed network slices of the UE.

(43) In one embodiment, the UE configuration update command does not add the second network slice to the set of allowed network slices of the UE.

(44) Corresponding embodiment of a network node that implements a NF are also disclosed.

(45) In one embodiment, a method performed by a UE comprises receiving, from a NF in a core network of a cellular communications system, a UE configuration update command comprising information that indicates that a first network slice is removed or is to be removed from a set of allowed network slices for the UE and information that indicates an instruction to transfer one or more PDU sessions of the UE established on the first network slice to a second network slice. The method further comprises performing a PDU session establishment procedure with respect to the second network slice to transfer the one or more PDU sessions from the first network slice to the second network slice.

(46) In one embodiment, the UE configuration update command further comprises an indication that the UE can apply SSC mode 3 logic for the PDU Session transfer.

(47) In one embodiment, the UE configuration update command further comprises information that adds the second network slice to the set of allowed network slices of the UE.

(48) In one embodiment, the method further comprises sending a registration request to the second network slice whereby the target network slice is added to the set of allowed network slices of the UE.

(49) Corresponding embodiments of a UE are also disclosed.

### Brief Description of the Drawings

(50) The accompanying drawing figures incorporated in and forming a part of this specification illustrate several aspects of the disclosure, and together with the description serve to explain the principles of the disclosure.
(51) Figure 1 illustrates one example of a cellular communications system in which embodiments of the present disclosure may be implemented;
(52) Figures 2 and 3 illustrate a wireless communication system represented as a 5^{th} Generation (5G) network architecture;
(53) Figure 4 illustrates the operation of a Network Function (NF) in accordance with one example embodiment;
(54) Figure 5 illustrates example embodiment of the present disclosure in which a Protocol Data Uni (PDU) session(s) are transferred from one network slice to another network slice;
(55) Figure 6 illustrates another example embodiment of the present disclosure in which a PDU session(s) are transferred from one network slice to another network slice;
(56) Figures 7, 8, and 9 are block diagrams of example embodiments of a network node; and
(57) Figures 10 and 11 are block diagrams of example embodiments of a User Equipment (UE).

### Detailed Description

(58) The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

(59) **Radio Node:** As used herein, a "radio node" is either a radio access node or a wireless communication device.

(60) **Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

(61) **Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing an Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

(62) **Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

(63) **Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

(64) **Network Node:** As used herein, a "network node" is any node that is either part of the RAN or the core network of a cellular communications network/system.

(65) Note that the description given herein focuses on a 3GPP cellular communications system and, as such, 3GPP terminology or terminology similar to 3GPP terminology is oftentimes used. However, the concepts disclosed herein are not limited to a 3GPP system.

(66) Note that, in the description herein, reference may be made to the term "cell"; however, particularly with respect to 5G NR concepts, beams may be used instead of cells and, as such, it is important to note that the concepts described herein are equally applicable to both cells and beams.

(67) There currently exist certain challenge(s). The existing procedures defined in the 3GPP specifications do not include all desired functionality for controlling the use of a network slice. Operators would like to control the use of a network slice to optimize the performance of their network. The operator may send UE policies for use of a network slice through extended UE Route Selection Policy (URSP) or some other means to have better management of the use of the network. The network monitors the UE compliance to the policies. Note that the actual policies sent to the UE or the means of monitoring them are out of scope of the present disclosure. However, in case of UE non-compliance, the operator may undertake some actions depending on the level of non-compliance by the UE.

(68) Even if the UEs are following network policies, there can be other reasons for a capability to enforce a certain usage of network slices. For example, an operator may like to pull a network slice out of service for maintenance or other reasons and would like to let the UE use another network slice instead.

(69) Finally, the operator may experience congestion in a network slice due to some unforeseen circumstance or, due to Network Slice Admission Control (NSAC) or simply due to there being a large number of UEs using the network slice (e.g. to access higher prioritized services or other UEs being considered to be of higher priority), there is a need to off-load a network slice and therefore the network would like to control the use of the network slice so as to alleviate e.g. the congestion.

(70) Certain aspects of the present disclosure and their embodiments may provide solutions to the aforementioned or other challenges. Embodiments of systems and methods that provide options for the operator to control the use of a network slice, e.g., due to any of the above reasons, are disclosed herein. The actual trigger for control of the use of a network slice is out of the scope of the present disclosure.

(71) Certain embodiments may provide one or more of the following technical advantage(s). Embodiments of the present disclosure may enable the network to control the use of a network slice, e.g., to alleviate congestion, to enable a network slice to be taken down (e.g., temporarily for maintenance), or the like.

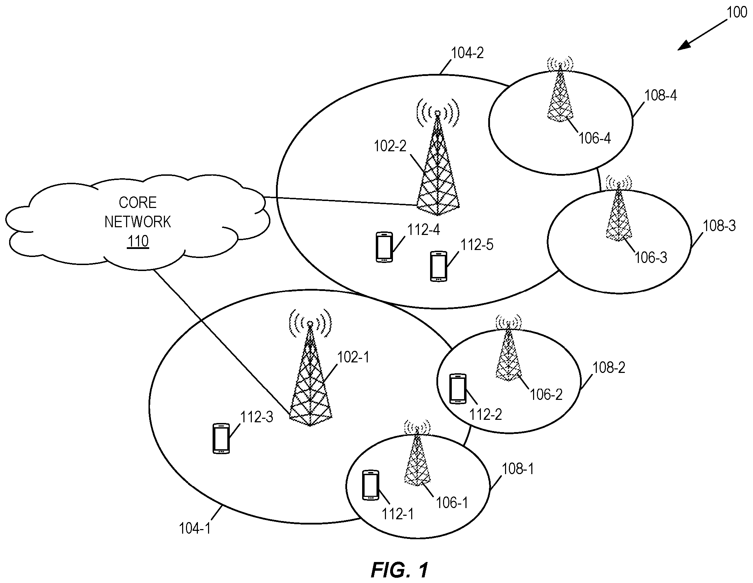

(72) **Figure 1** illustrates one example of a cellular communications system 100 in which embodiments of the present disclosure may be implemented. In the embodiments described herein, the cellular communications system 100 is a 5G system (5GS) including a Next Generation RAN (NG-RAN) and a 5G Core (5GC); however, the present disclosure is not limited thereto. In this example, the RAN includes base stations 102-1 and 102-2, which in the 5GS include NR base stations (gNBs) and optionally next generation eNBs (ng-eNBs), controlling corresponding (macro) cells 104-1 and 104-2. The base stations 102-1 and 102-2 are generally referred to herein collectively as base stations 102 and individually as base station 102. Likewise, the (macro) cells 104-1 and 104-2 are generally referred to herein collectively as (macro) cells 104 and individually as (macro) cell 104. The RAN may also include a number of low power nodes 106-1 through 106-4 controlling corresponding small cells 108-1 through 108-4. The low power nodes 106-1 through 106-4 can be small base stations (such as pico or femto base stations) or RRHs, or the like. Notably, while not illustrated, one or more of the small cells 108-1 through 108-4 may alternatively be provided by the base stations 102. The low power nodes 106-1 through 106-4 are generally referred to herein collectively as low power nodes 106 and individually as low power node 106. Likewise, the small cells 108-1 through 108-4 are generally referred to herein collectively as small cells 108 and individually as small cell 108. The cellular communications system 100 also includes a core network 110, which in the 5G System (5GS) is referred to as the 5GC. The base stations 102 (and optionally the low power nodes 106) are connected to the core network 110.

(73) The base stations 102 and the low power nodes 106 provide service to wireless communication devices 112-1 through 112-5 in the corresponding cells 104 and 108. The wireless communication devices 112-1 through 112-5 are generally referred to herein collectively as wireless communication devices 112 and individually as wireless communication device 112. In the following description, the wireless communication devices 112 are oftentimes UEs, but the present disclosure is not limited thereto.

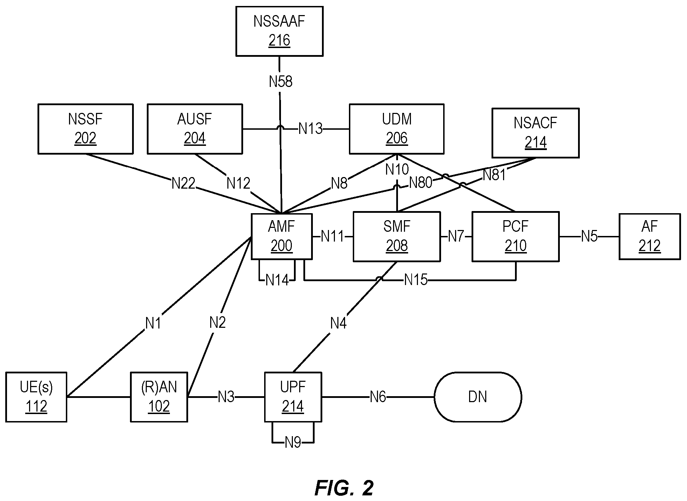

(74) **Figure 2** illustrates a wireless communication system represented as a 5G network architecture composed of core Network Functions (NFs), where interaction between any two NFs is represented by a point-to-point reference point/interface. Figure 2 can be viewed as one particular implementation of the system 100 of Figure 1.

(75) Seen from the access side the 5G network architecture shown in Figure 2 comprises a plurality of UEs 112 connected to either a RAN 102 or an Access Network (AN) as well as an AMF 200. Typically, the R(AN) 102 comprises base stations, e.g. such as eNBs or gNBs or similar. Seen from the core network side, the 5GC NFs shown in Figure 2 include a NSSF 202, an AUSF 204, a UDM 206, the AMF 200, a SMF 208, a PCF 210, an Application Function (AF) 212, a Network Slice Admission Control Function (NSACF) 214, and a Network Slice-specific and Stand-alone Non-Public Network (SNPN) Authentication and Authorization Function (NSSAAF) 216.

(76) Reference point representations of the 5G network architecture are used to develop detailed call flows in the normative standardization. The N1 reference point is defined to carry signaling between the UE 112 and AMF 200. The reference points for connecting between the AN 102 and AMF 200 and between the AN 102 and UPF 214 are defined as N2 and N3, respectively. There is a reference point, N11, between the AMF 200 and SMF 208, which implies that the SMF 208 is at least partly controlled by the AMF 200. N4 is used by the SMF 208 and UPF 214 so that the UPF 214 can be set using the control signal generated by the SMF 208, and the UPF 214 can report its state to the SMF 208. N9 is the reference point for the connection between different UPFs 214, and N14 is the reference point connecting between different AMFs 200, respectively. N15 and N7 are defined since the PCF 210 applies policy to the AMF 200 and SMF 208, respectively. N12 is required for the AMF 200 to perform authentication of the UE 112. N8 and N10 are defined because the subscription data of the UE 112 is required for the AMF 200 and SMF 208.

(77) The 5GC network aims at separating UP and CP. The UP carries user traffic while the CP carries signaling in the network. In Figure 2, the UPF 214 is in the UP and all other NFs, i.e., the AMF 200, SMF 208, PCF 210, AF 212, NSSF 202, AUSF 204, and UDM 206, are in the CP. Separating the UP and CP guarantees each plane resource to be scaled independently. It also allows UPFs to be deployed separately from CP functions in a distributed fashion. In this architecture, UPFs may be deployed very close to UEs to shorten the Round Trip Time (RTT) between UEs and data network for some applications requiring low latency.

(78) The core 5G network architecture is composed of modularized functions. For example, the AMF 200 and SMF 208 are independent functions in the CP. Separated AMF 200 and SMF 208 allow independent evolution and scaling. Other CP functions like the PCF 210 and AUSF 204 can be separated as shown in Figure 2. Modularized function design enables the 5GC network to support various services flexibly.

(79) Each NF interacts with another NF directly. It is possible to use intermediate functions to route messages from one NF to another NF. In the CP, a set of interactions between two NFs is defined as service so that its reuse is possible. This service enables support for modularity. The UP supports interactions such as forwarding operations between different UPFs.

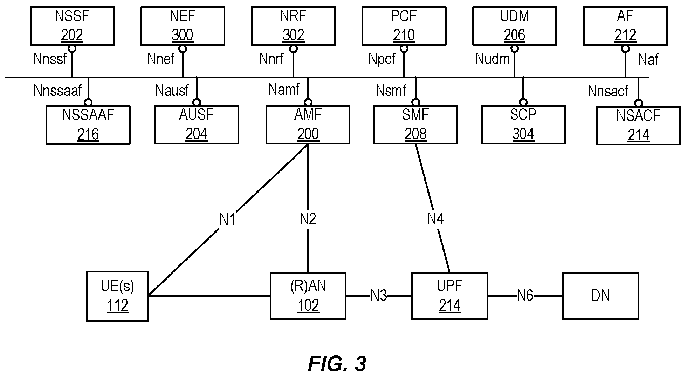

(80) **Figure 3** illustrates a 5G network architecture using service-based interfaces between the NFs in the CP, instead of the point-to-point reference points/interfaces used in the 5G network architecture of Figure 2. However, the NFs described above with reference to Figure 2 correspond to the NFs shown in Figure 3. The service(s) etc. that a NF provides to other authorized NFs can be exposed to the authorized NFs through the service-based interface. In Figure 3 the service based interfaces are indicated by the letter "N" followed by the name of the NF, e.g. Namf for the service based interface of the AMF 200 and Nsmf for the service based interface of the SMF 208, etc. The NEF 300, the NRF 302, and a Service Communication Proxy (SCP) 304 in Figure 3 are not shown in Figure 2 discussed above. However, it should be clarified that all NFs depicted in Figure 2 can interact with the NEF 300 and the NRF 302 of Figure 3 as necessary, though not explicitly indicated in Figure 2.

(81) Some properties of the NFs shown in Figures 2 and 3 may be described in the following manner. The AMF 200 provides UE-based authentication, authorization, mobility management, etc. A UE 112 even using multiple access technologies is basically connected to a single AMF 200 because the AMF 200 is independent of the access technologies. The SMF 208 is responsible for session management and allocates Internet Protocol (IP) addresses to UEs. It also selects and controls the UPF 214 for data transfer. If a UE 112 has multiple sessions, different SMFs 208 may be allocated to each session to manage them individually and possibly provide different functionalities per session. The AF 212 provides information on the packet flow to the PCF 210 responsible for policy control in order to support QoS. Based on the information, the PCF 210 determines policies about mobility and session management to make the AMF 200 and SMF 208 operate properly. The AUSF 204 supports authentication function for UEs or similar and thus stores data for authentication of UEs or similar while the UDM 206 stores subscription data of the UE 112. The Data Network (DN), not part of the 5GC network, provides Internet access or operator services and similar.

(82) An NF may be implemented either as a network element on a dedicated hardware, as a software instance running on a dedicated hardware, or as a virtualized function instantiated on an appropriate platform, e.g., a cloud infrastructure.

(83) Embodiments of systems and methods that provide options for the operator to control the use of a network slice. the triggers (i.e., the triggers for controlling the use of a network slice) for the procedures below can be one of many. As an example, the NSACF 214 can initiate an action to the AMF 200 based on network slice congestion. An Operations and Management (O&M) node can initiate the request. A PCF 210 can equally initiate the action.

(84) Embodiments of the present disclosure propose different actions depending in the level of control required. The following network-initiated capabilities are proposed to be supported:
- Case 1: Deregistering network slices for UEs 112 or deregistering the UEs 112 that are registering in network slices without establishing any Protocol Data Unit (PDU) sessions.
- Case 2: Deregistering network slices for UEs 112 or deregistering the UEs 112 that have PDU sessions that are not active.
- Case 3: Enabling PDU sessions to be transferred from one network slice to another network slice, the other network slice can be previously included in the Allowed Network Slice Selection Assistance Information (NSSAI) or will be added to the Allowed NSSAI.

(85) The above capabilities can be applied in the context of deregistering the network slice for a limited number of UEs 112 with progressively applying one or more of the above capabilities, as required, or applying all of the above capabilities in case of a network slice being taken out of service permanently or for a limited time (i.e., in such case the capabilities of case 3 is done first and then subsequently applying the deregistration).

(86) For case 1 and case 2, the AMF 200 can deregister a UE 112 (e.g., when the UE 112 is only registered to one network slice) using existing procedure "network initiated deregistration" as specified in clause 4.2.2.3.3 of 3GPP TS 23.502 or deregistering a network slice for a UE 112 by removing the S-NSSAI from the Allowed NSSAI using the UE Configuration Update procedure as specified in clause 4.2.4.2 of TS 23.502. The AMF 200 first monitors the usage of the network slice, e.g., if no PDU Session is established for a certain time or PDU Session is established but is kept inactive for a certain time, and if not complying with the network policy, the AMF 200 deregisters the UE 112 from the network slice. As stated before, the means of detecting non-compliance are out of scope of the present disclosure as well as triggers can be initiated by other NFs such as PCF 210, NSACF 214.

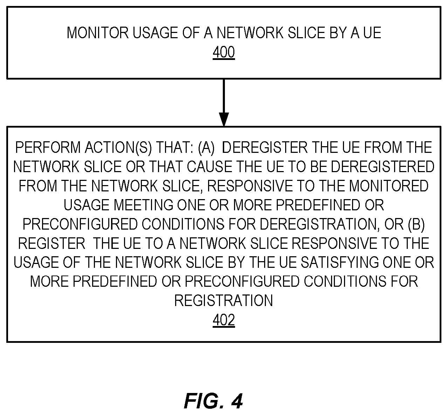

(87) In this regard, **Figure 4** illustrates the operation of a NF in accordance with one example embodiment for case 1 and case 2. The NF may be the AMF 300 or some other NF such as, e.g., the PCF 210, the NSACF 214, or the like. As illustrated, the NF monitors the usage of a network slice by a UE 112 (step 400). This monitoring may include monitoring whether the UE 112 has not established a PDU session within a certain time (e.g., within a certain amount of time since the UE 112 registered with the network slice) and/or monitoring whether the UE 112 has an established PDU session on the network slice that has been inactive for a certain amount of time. If monitored usage of the network slice by the UE 112 satisfies one or more predefined or preconfigured conditions for triggering deregistration (e.g., the UE 112 has not established a PDU session on the network slice within a predefined or configured amount of time since registering on the network slice or the PDU session of the UE 112 on the network slice has been inactive for a predefined or configured amount of time), then the NF performs one or more actions that: (A) deregister the UE 112 from the network slice or cause the UE 112 to be deregistered from the network slice responsive to the usage of the network slice by the UE 112 satisfying one or more predefined or preconfigured conditions for deregistration or (B) register the UE 112 to a network slice responsive to the usage of the network slice by the UE 112 satisfying one or more predefined or preconfigured conditions for registration (step 402). For example, the NF may initiate a network-initiated deregistration, e.g., as specified in clause 4.2.2.3.3 of 3GPP TS 23.502 or deregister or initiate deregistration of the network slice for the UE 112 by removing the S-NSSAI of the network slice from the Allowed NSSAI for the UE 112, e.g., using the UE Configuration Update procedure as specified in clause 4.2.4.2 of TS 23.502. For registration, the NF may add the network slice to a set of allowed network slices for the UE (112), e.g., in a registration accept message or UE Configuration Update message.

(88) For case 3, in one option, the AMF 200 initiates UE Configuration Update procedure towards the UE 112. The procedure is extended to support a PDU session transfer request from a source network slice (network slice to be removed) to a new target network slice if the AMF 200 can locate another suitable network slice in the Allowed NSSAI or a new network slice is to be requested. If the target network slice is already in the Allowed NSSAI (before the UE Configuration Update procedure) or is added to the Allowed NSSAI by the UE Configuration Update procedure, the UE then initiates a new PDU session using the target network slice for that purpose and subsequently tears down the PDU session on the source network slice. If the target network slice is required to be registered by the UE 112, i.e. needs to be added to the Allowed NSSAI, the UE 112 first requests the network slice by issuing a registration request and including the target network slice in the Requested NSSAI, and then when the target NSSAI is in the Allowed NSSAI, the UE 112 establishes a PDU Session(s) using the target network slice. If the UE 112 has received information that SSC mode 3 operation applies in this case, the UE 112 includes the "Old PDU Session ID" which indicates the PDU Session ID of the on-going PDU Session to be released and includes "Existing PDU Session" in the PDU Session Establishment request to the AMF 200. If the AMF 200 selects the same old SMF, then it includes the "old PDU session ID" in the request to the old SMF.

(89) In another option, the AMF 200 initiates a request towards the SMF 208 for a PDU session transfer, extending the existing service Nsmf_PDUSession_UpdateSM Context to support transfer of a PDU session from source network slice to target network slice. The SMF 208 may optionally instruct the UE 112 that SSC Mode 3 applies in this case. The SMF 208 uses existing session management procedures extended with the necessary information to notify the UE 112 to initiate a new PDU session towards the target slice. Once the UE 112 successfully establishes the PDU session using the target network slice, the UE 112 tears down the old PDU session. A new SMF can be used to establish the new PDU session, or the same SMF is selected in case of SSC mode 3 and UE uses " Existing PDU Session " as described previously, i.e. if the UE 112 has received information SCC Mode 3 applies.

(90) In either of the above options for case 3, a make before break is assumed.

(91) If the UE 112 did not receive SCC mode 3, then break then make applies using existing procedures.

(92) The extended procedures below illustrate example embodiments of the present disclosure for the two options for case 3described above.

(93) **Option 1** - **PDU Session Transfer from Source Network Slice to Target Network Slice - UE Initiated Approach:** In one embodiment of this option, the UE Configuration Update Procedure is updated to remove the source network slice (e.g., the NSSAI of the source network slice) that needs to be removed from the allowed network slices (e.g., Allowed NSSAI in the following description). In one embodiment, there is a new control information element (IE) to describe the handling of PDU sessions established on a network slice that is now removed from the Allowed NSSAI. The IE information instructs the UE 112 to transfer the PDU session from the removed network slice or to be removed network slice in Allowed NSSAI to a new target network slice in the Allowed NSSAI (as indicated via the UE Configuration Procedure). The to be removed network slice can either be kept in the Allowed NSSAI for the duration of the UE Configuration Update procedure and later removed, or directly removed by the UE Configuration Update command, but regarded as still allowed until the transfer to the target network slice has been completed.

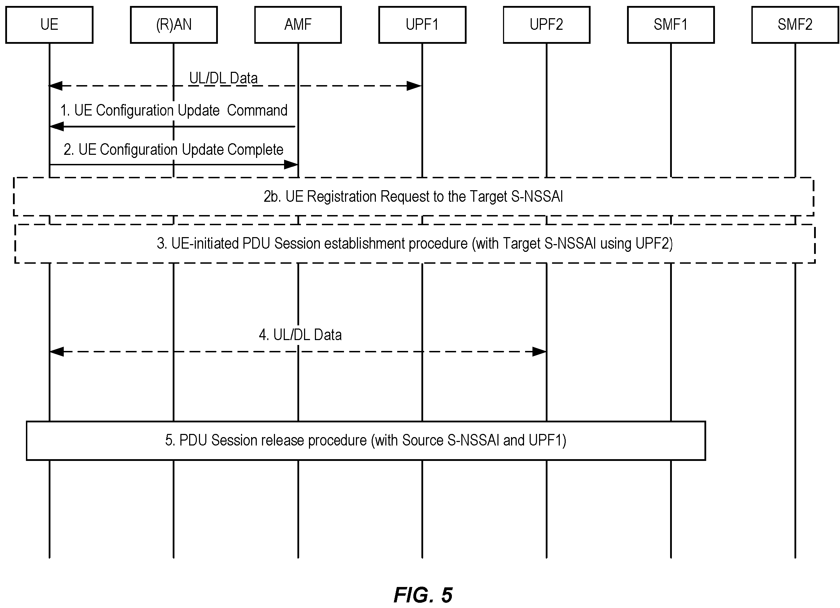

(94) The call flow in **Figure 5** illustrates one example embodiment of Option 1. The following is a brief description of the steps in the call flow. The assumption in the call flow is the UE 112 that has some PDU Sessions already established on a network slice and these PDU sessions have to be transferred to another network slice.
- **Step 1:** In this step, the AMF 200 initiates a UE Configuration Update Command. The UE Configuration Update Command includes information that indicates, in (or in relation to) the Allowed NSSAI, the network slice to be removed. The UE Configuration Update Command also includes a new IE to instruct the UE 112 regarding the removed slice (or to be removed network slice). In this embodiment, the UE Configuration Update Command (e.g., the new IE) also indicates the target network slice (e.g., indicates which NSSAI in the Allowed NSSAIs is the target network slice). The UE Configuration Update Command (e.g., the new IE) may indicate that the UE 112 can apply SSC mode 3 logic for the PDU Session transfer. In this case, the UE 112 is instructed to perform a PDU session transfer with make before break of all PDU Sessions using the to be removed network slice to the Target network slice.
   Editor's Note: It is FFS if additional information is to be included in the new IE to perform PDU Session Transfer.
- In step 2 the UE acknowledges the reception of the Configuration Update Command
- **Step 2b (Optional):** As stated before, in an alternative embodiment, the target network slice is not added to the Allowed NSSAI via the UE Configuration Update procedure. In this alternative embodiment, the UE 112 requests to be registered to the target network slice by issuing a registration request where the registration request includes the target network slice (e.g., Target NSSAI) in the Requested NSSAI. Then, when the target NSSAI is in the Allowed NSSAI as a result of the registration request, the UE establish PDU Session(s) for the transfer using the target network slice (see step 3).
- **Step 3:** The UE 112 performs a UE-initiated PDU establishment procedure to reestablish the PDU session(s) that were previously on the source network slice on the target network slice.

(95) While note necessary for understanding of embodiments of the present disclosure, additional details regarding step 3 and the remaining steps of Figure 5 are based on existing procedures per clause 4.3.5.2 of TS 23.502.

(96) **Option 2** - **PDU Session Transfer from Source Slice to Target Slice - Network Initiated Approach:** In one embodiment of this option, the network slices in Allowed NSSAI are not changed, but one of the network slices is temporarily taken out of service, or should not be used, as an example. The AMF 200 instructs the SMF 208 used for the source network slice (i.e., network slice to not to be used), to initiate a PDU Session Transfer from the source network slice to the target network slice (new network slice to be used). The Nsmf_PDUSession_UpdateSMContext service is extended to support such a capability, e.g. the AMF 200 indicates the Target network slice to the SMF 208. The SMF 208 in turn sends a PDU Session Modification Request to the UE 112 to initiate a PDU Session transfer. The PDU Modification Session Request can be extended to support this new capability (e.g., adding target slice, and optionally source slice that otherwise could be derived from existing PDU Session, either in PCO together with existing "PDU Session Address Lifetime value" or in a new IE, and SSC mode 3 logic can be used by the UE when establishing the new PDU Session, i.e. indicating "Existing PDU Session" and PDU Session ID). Optionally, instead of a PDU Modification Session request, a new PDU Session Transfer Message is created and dedicated for this purpose. Once the UE 112 successfully establishes the PDU session using the new target slice and usually the same Data Network Name (DNN), the UE 112 can release the old PDU session used with the source network slice (i.e., locally in the UE 112 or by explicit signaling, if locally is done the AMF 200 applies the same logic and locally releases the PDU Session within the network as per existing procedures). A new SMF can be used to establish the new PDU session.

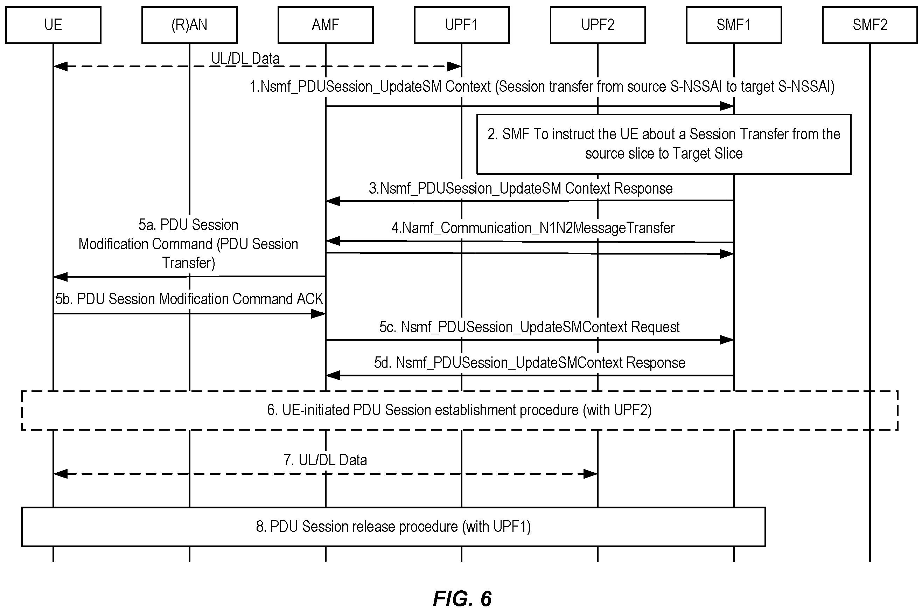

(97) The call flow in **Figure 6** illustrates one example embodiment of the procedure described above for Option 2. The assumption in the call flow is the UE 112 has some PDU Sessions already established on a network slice, and these PDU sessions have to be transferred to another network slice. For the sake of this example, it is assumed that the target slice is already in the Allowed Slices the UE received in a previous registration.
- **Step 1:** In this step, the AMF 200 initiates a Nsmf_PDUSession_UpdateSMContext Request to initiate a PDU session transfer from a source slice to a target slice. The Request is extended to support this new capability, e.g. the Target network slice to the SMF 208 and possibly an indication that a transfer is to be initiated. The Request is now extended with some or all of the following optional information so that the SMF 208 can **inform** the UE 112 to perform a PDU Session transfer from source slice to a target slice:
   ∘Source network Slice
   ∘Target network Slice
   ∘Action : Perform Session transfer for all PDU sessions immediately or at a scheduled tie time applicable to the UE location.
   ∘Optionally, that SSC mode 3 logic can be applied
- **Step 2:** The SMF 208 initiates action to notify the UE 112 about a PDU session transfer from a source slice to a target slice as indicated above in extending the PDU Session Modification Request sent to the UE to include the needed information.
- **Step 3:** The SMF 208 returns Nsmf_PDUSession_UpdateSMContext response to the AMF 200.
- **Step 4:** The SMF 208 invokes the Namf_Communication_N1N2MessageTransfer to include an SM container towards the UE 112 with a PDU Session Modification Command extended (e.g., with target S-NSSAI) to inform the UE 112 of a PDU Session Transfer. Optionally a new message can be created and dedicated for the purpose of a PDU session transfer from a source slice to a target slice.
- **Step 5:** The AMF 200 forwards the SM Container content to the UE 112.

(98) The remaining steps are based on existing procedures per clause 4.3.5.2. of 3GPP TS 23.502.

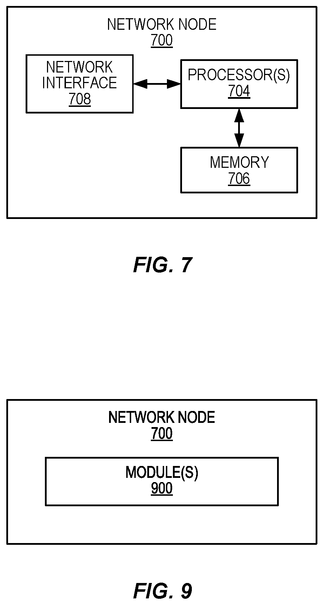

(99) **Figure 7** is a schematic block diagram of a network node 700 according to some embodiments of the present disclosure. Optional features are represented by dashed boxes. The network node 700 may be, for example, a core network node that implements a NF (e.g., AMF 200, SMF 208, PCT 210, or NSACF 214) or a network node that implements all or part of the functionality of an NF (e.g., all or part of the functionality of the AMF 200, the SMF 208, or the NSACF 304 described herein). As illustrated, the network node 700 includes a one or more processors 704 (e.g., Central Processing Units (CPUs), Application Specific Integrated Circuits (ASICs), Field Programmable Gate Arrays (FPGAs), and/or the like), memory 706, and a network interface 708. The one or more processors 704 are also referred to herein as processing circuitry. The one or more processors 704 operate to provide one or more functions of the network node 700 as described herein (e.g., one or more functions of the AMF 200, SMF 208, PCT 210, or NSACF 214 described herein). In some embodiments, the function(s) are implemented in software that is stored, e.g., in the memory 706 and executed by the one or more processors 704.

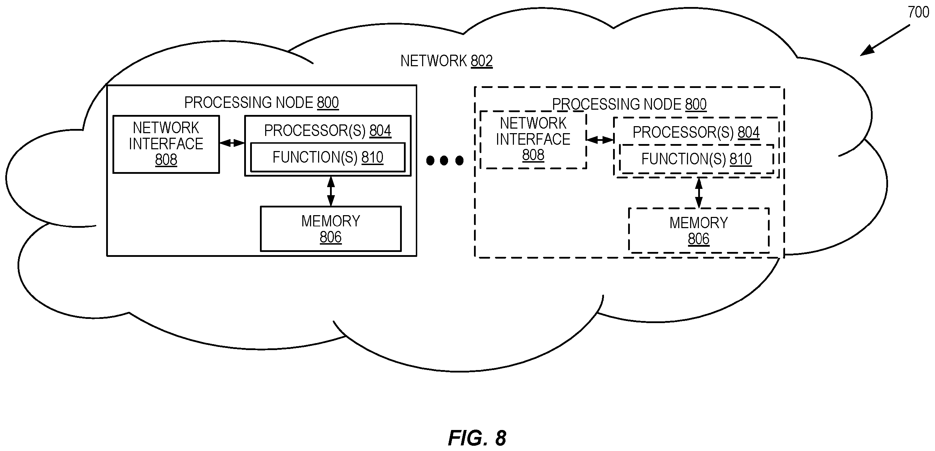

(100) Figure 8 is a schematic block diagram that illustrates a virtualized embodiment of the network node 700 according to some embodiments of the present disclosure. Again, optional features are represented by dashed boxes. As used herein, a "virtualized" network node is an implementation of the network node 700 in which at least a portion of the functionality of the network node 700 is implemented as a virtual component(s) (e.g., via a virtual machine(s) executing on a physical processing node(s) in a network(s)). As illustrated, in this example, the network node 700 includes one or more processing nodes 800 coupled to or included as part of a network(s) 802. Each processing node 800 includes one or more processors 804 (e.g., CPUs, ASICs, FPGAs, and/or the like), memory 806, and a network interface 808. In this example, functions 810 of the network node 700 described herein (e.g., one or more functions of the AMF 200, SMF 208, PCT 210, or NSACF 214 described herein) are implemented at the one or more processing nodes 800 or distributed across the two or more processing nodes 800 in any desired manner. In some particular embodiments, some or all of the functions 810 of the network node 700 described herein are implemented as virtual components executed by one or more virtual machines implemented in a virtual environment(s) hosted by the processing node(s) 800.

(101) In some embodiments, a computer program including instructions which, when executed by at least one processor, causes the at least one processor to carry out the functionality of the network node 700 or a node (e.g., a processing node 800) implementing one or more of the functions 810 of the network node 700 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

(102) Figure 9 is a schematic block diagram of the network node 700 according to some other embodiments of the present disclosure. The network node 700 includes one or more modules 900, each of which is implemented in software. The module(s) 900 provide the functionality of the network node 700 described herein. This discussion is equally applicable to the processing node 800 of Figure 8 where the modules 900 may be implemented at one of the processing nodes 800 or distributed across multiple processing nodes 800.

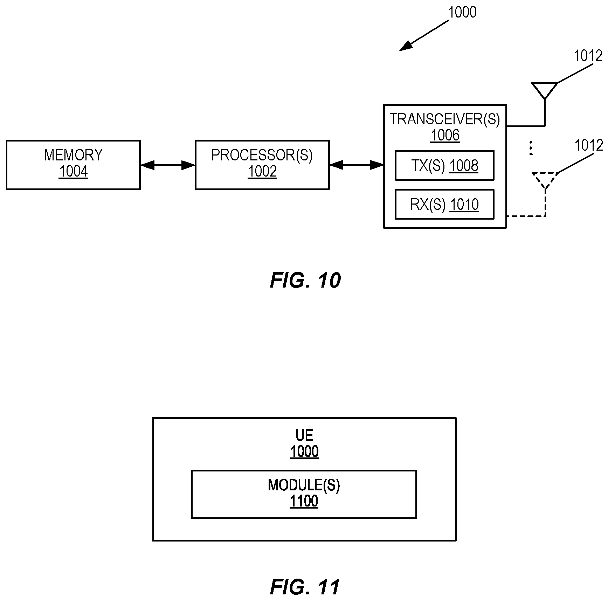

(103) Figure 10 is a schematic block diagram of a wireless communication device 1000 (e.g., UE 112) according to some embodiments of the present disclosure. As illustrated, the wireless communication device 1000 includes one or more processors 1002 (e.g., CPUs, ASICs, FPGAs, and/or the like), memory 1004, and one or more transceivers 1006 each including one or more transmitters 1008 and one or more receivers 1010 coupled to one or more antennas 1012. The transceiver(s) 1006 includes radio-front end circuitry connected to the antenna(s) 1012 that is configured to condition signals communicated between the antenna(s) 1012 and the processor(s) 1002, as will be appreciated by on of ordinary skill in the art. The processors 1002 are also referred to herein as processing circuitry. The transceivers 1006 are also referred to herein as radio circuitry. In some embodiments, the functionality of the wireless communication device 1000 described above may be fully or partially implemented in software that is, e.g., stored in the memory 1004 and executed by the processor(s) 1002. Note that the wireless communication device 1000 may include additional components not illustrated in Figure 10 such as, e.g., one or more user interface components (e.g., an input/output interface including a display, buttons, a touch screen, a microphone, a speaker(s), and/or the like and/or any other components for allowing input of information into the wireless communication device 1000 and/or allowing output of information from the wireless communication device 1000), a power supply (e.g., a battery and associated power circuitry), etc.

(104) In some embodiments, a computer program including instructions which, when executed by at least one processor, causes the at least one processor to carry out the functionality of the wireless communication device 1000 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

(105) Figure 11 is a schematic block diagram of the wireless communication device 1000 (e.g., UE 112) according to some other embodiments of the present disclosure. The wireless communication device 1000 includes one or more modules 1100, each of which is implemented in software. The module(s) 1100 provide the functionality of the wireless communication device 1000 described herein.

(106) Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

(107) While processes in the figures may show a particular order of operations performed by certain embodiments of the present disclosure, it should be understood that such order is exemplary (e.g., alternative embodiments may perform the operations in a different order, combine certain operations, overlap certain operations, etc.).

(108) Some example embodiments of the present disclosure are as follows:
(109) Embodiment 1: A method performed by a Network Function, NF, in a core network (110) of a cellular communications system (100), the method comprising:
   - monitoring (400) usage of a network slice by a User Equipment, UE, (112); and
   - performing (402) one or more actions to:
      ∘ deregister the UE (112) from the network slice or that cause the UE (112) to be deregistered from the network slice, responsive to the usage of the network slice by the UE (112) satisfying one or more predefined or preconfigured conditions for deregistration, and/or
      ∘ register the UE (112) to a network slice responsive to the usage of the network slice by the UE (112) satisfying one or more predefined or preconfigured conditions for registration.
(110) Embodiment 2: The method of embodiment 1 wherein performing (402) the one or more actions comprises performing (402) one or more actions to deregister the UE (112) from the network slice or that cause the UE (112) to be deregistered from the network slice, responsive to the usage of the network slice by the UE (112) satisfying one or more predefined or preconfigured conditions for deregistration.
(111) Embodiment 3: The method of embodiment 2 wherein monitoring (400) the usage of the network slice by the UE (112) comprises monitoring (400) whether the UE (112) has established a Protocol Data Unit, PDU, session on the network slice within a certain amount of time after the UE (112) has registered with the network slice, and the one or more predefined or preconfigured conditions for deregistration comprises a condition that the UE (112) has not established a PDU session on the network slice within the certain amount of time.
(112) Embodiment 4: The method of embodiment 2 wherein monitoring (400) the usage of the network slice by the UE (112) comprises monitoring (402) whether a Protocol Data Unit, PDU, session of the UE (112) on the network slice is inactive for a certain amount of time, and the one or more predefined or preconfigured conditions for deregistration comprises a condition that the PDU session is inactive for the certain amount of time.
(113) Embodiment 5: The method of any of embodiments 2 to 4 wherein performing (402) the one or more actions to deregister the UE (112) from the network slice or that cause the UE (112) to be deregistered from the network slice comprises initiating a network-initiated deregistration procedure.
(114) Embodiment 6: The method of any of embodiments 2 to 4 wherein performing (402) the one or more actions to deregister the UE (112) from the network slice or that cause the UE (112) to be deregistered from the network slice comprises removing the network slice from a set of allowed network slices of the UE (112).
(115) Embodiment 7: The method of any of embodiments 2 to 4 wherein performing (402) the one or more actions to deregister the UE (112) from the network slice or that cause the UE (112) to be deregistered from the network slice comprises removing the network slice from a set of allowed network slices of the UE (112) using a UE Configuration Update procedure.
(116) Embodiment 8: The method of any of embodiments 1 to 7 wherein performing (402) the one or more actions comprises performing one or more actions to register the UE (112) to a network slice responsive to the usage of the network slice by the UE (112) satisfying one or more predefined or preconfigured conditions for registration.
(117) Embodiment 9: The method of embodiment 8 wherein performing the one or more actions to register the UE (112) to the network slice comprises adding the network slice to a set of allowed network slices for the UE (112), e.g., in a registration accept message or UE Configuration Update message.
(118) Embodiment 10: The method of any of embodiments 1 to 9 wherein the NF is an AMF, SMF, PCF, or NSACF.
(119) Embodiment 11: A network node that implements a NF that operates in accordance with any of embodiments 1 to 10.
(120) Embodiment 12: A method comprising:
   - at a Network Function, NF, in a core network (110) of a cellular communications system (100):
      ∘ sending (Fig. 5, step 1), towards a User Equipment, UE, (112), a UE configuration update command comprising:
         ▪ information that indicates that a first network slice is removed or is to be removed from a set of allowed network slices for the UE (112); and
         ▪ information that indicates an instruction to transfer one or more Protocol Data Unit, PDU, sessions of the UE (112) established on the first network slice to a second network slice;
   - at the UE (110):
      ∘ receiving (Fig. 5, step 1) the configuration update command from the NF;
      ∘ performing (Fig. 5, step 3) a PDU session establishment procedure with respect to the second network slice to transfer the one or more PDU sessions from the first network slice to the second network slice.
(121) Embodiment 13: The method of embodiment 12 wherein the UE configuration update command further comprises an indication that the UE (112) can apply SSC mode 3 logic for the PDU Session transfer.
(122) Embodiment 14: The method of embodiment 12 or 13 wherein the UE configuration update command further comprises information that adds the second network slice to the set of allowed network slices of the UE (112).
(123) Embodiment 15: The method of embodiment 12 or 13 further comprising, at the UE (112), sending (Fig. 6, step 2b) a registration request to the second network slice whereby the target network slice is added to the set of allowed network slices of the UE (112).
(124) Embodiment 16: A method performed by a Network Function, NF, in a core network (110) of a cellular communications system (100), the method comprising:
   - sending (Fig. 5, step 1), towards a User Equipment, UE, (112), a UE configuration update command comprising:
      ∘ information that indicates that a first network slice is removed or is to be removed from a set of allowed network slices for the UE (112); and
      ∘ information that indicates an instruction to transfer one or more Protocol Data Unit, PDU, sessions of the UE (112) established on the first network slice to a second network slice.
(125) Embodiment 17: The method of embodiment 16 wherein the UE configuration update command further comprises an indication that the UE (112) can apply SSC mode 3 logic for the PDU Session transfer.
(126) Embodiment 18: The method of embodiment 16 or 17 wherein the UE configuration update command further comprises information that adds the second network slice to the set of allowed network slices of the UE (112).
(127) Embodiment 19: The method of embodiment 16 or 17 wherein the UE configuration update command does not add the second network slice to the set of allowed network slices of the UE (112).
(128) Embodiment 20: A network node that implements a NF that operates in accordance with any of embodiments 16 to 19.
(129) Embodiment 21: A method performed by a User Equipment, UE, (112), the method comprising:
   - receiving (Fig. 5, step 1), from a Network Function, NF, in a core network (110) of a cellular communications system (100), a UE configuration update command comprising:
      ∘ information that indicates that a first network slice is removed or is to be removed from a set of allowed network slices for the UE (112); and
      ∘ information that indicates an instruction to transfer one or more Protocol Data Unit, PDU, sessions of the UE (112) established on the first network slice to a second network slice; and
   - performing (Fig. 5, step 3) a PDU session establishment procedure with respect to the second network slice to transfer the one or more PDU sessions from the first network slice to the second network slice.
(130) Embodiment 22: The method of embodiment 21 wherein the UE configuration update command further comprises an indication that the UE (112) can apply SSC mode 3 logic for the PDU Session transfer.
(131) Embodiment 23: The method of embodiment 21 or 22 wherein the UE configuration update command further comprises information that adds the second network slice to the set of allowed network slices of the UE (112).
(132) Embodiment 24: The method of embodiment 21 or 22 further comprising sending (Fig. 6, step 2b) a registration request to the second network slice whereby the target network slice is added to the set of allowed network slices of the UE (112).
(133) Embodiment 25: A User Equipment, UE, (112), adapted to perform the method of any of embodiments 21 to 24.
(134) Embodiment 26: A method comprising:
   - at a first Network Function, NF, in a core network (110) of a cellular communications system (100):
      ∘ sending (Fig. 6, step 1), to a second NF associated with a first network slice, a first message that initiates transfer of one or more Protocol Data Unit, PDU, sessions of a User Equipment, UE, (112) from the first network slice to a second network slice:
   - at the second NF:
      ∘ receiving (Fig. 6, step 1) the first message from the first NF; and
      ∘ sending (Fig. 6, step 4), toward the UE (112), a PDU session modification request for the transfer of the one or more PDU sessions of the UE (112) from the first network slice to the second network slice.
(135) Embodiment 27: The method of embodiment 26 wherein the first message comprises:
   (a) information that indicates the first network slice;
   (b) information that indicates the second network slice;
   (c) information that indicates whether the transfer of the one or more PDU session from the first network slice to the second network slice is to be performed immediately or at a scheduled time;
   (d) information that indicates that SSC mode 3 logic can be applied; or
   (e) a combination of any two or more of (a) - (d).
(136) Embodiment 28: The method of embodiment 26 or 27 wherein:
   - at the second NF, sending (Fig. 6, step 4) the PDU session modification request toward the UE (112) comprises sending (Fig. 6, step 4) a second message comprising the PDU session modification request to the first NF; and
   - at the first NF:
      ∘ receiving (Fig. 6, step 4) the second message from the second NF; and
      ∘ sending (Fig. 6, step 5a) the PDU session modification request to the UE (112).
(137) Embodiment 29: The method of any of embodiments 26 to 28 further comprising:
   - at the UE (110):
      ∘ receiving (Fig. 6, step 5a) the PDU session modification request; and
      ∘ performing one or more actions to effect transfer of the one or more PDU sessions from the first network slice to the second network slice responsive to the PDU session modification request.
(138) Embodiment 30: The method of any of embodiments 26 to 29 wherein the first NF is an AMF and the second NF is an SMF.
(139) Embodiment 31: A method performed by a first Network Function, NF, in a core network (110) of a cellular communications system (100), the method comprising sending (Fig. 6, step 1), to a second NF associated with a first network slice, a first message that initiates transfer of one or more Protocol Data Unit, PDU, sessions of a User Equipment, UE, (112) from the first network slice to a second network slice.
(140) Embodiment 32: The method of embodiment 31 wherein the first message comprises:
   (a) information that indicates the first network slice;
   (b) information that indicates the second network slice;
   (c) information that indicates whether the transfer of the one or more PDU session from the first network slice to the second network slice is to be performed immediately or at a scheduled time;
   (d) information that indicates that SSC mode 3 logic can be applied; or
   (e) a combination of any two or more of (a) - (d).
(141) Embodiment 33: The method of embodiment 31 or 32 further comprising: receiving (Fig. 6, step 4), from the second NF, a second message comprising a PDU session modification request for the transfer of the one or more PDU sessions of the UE (112) from the first network slice to the second network slice; and sending (Fig. 6, step 5a) the PDU session modification request to the UE (112).
(142) Embodiment 34: The method of any of embodiments 31 to 33 wherein the first NF is an AMF and the second NF is an SMF.
(143) Embodiment 35: A method performed by a second Network Function, NF, associated with a first network slice in a core network (110) of a cellular communications system (100), the method comprising: receiving (Fig. 6, step 1), from a first NF, a first message that initiates transfer of one or more Protocol Data Unit, PDU, sessions of a User Equipment, UE, (112) from the first network slice to a second network slice; and sending (Fig. 6, step 4), toward the UE (112), a PDU session modification request for the transfer of the one or more PDU sessions of the UE (112) from the first network slice to the second network slice.
(144) Embodiment 36: The method of embodiment 35 wherein the first message comprises:
   (a) information that indicates the first network slice;
   (b) information that indicates the second network slice;
   (c) information that indicates whether the transfer of the one or more PDU session from the first network slice to the second network slice is to be performed immediately or at a scheduled time;
   (d) information that indicates that SSC mode 3 logic can be applied; or
   (e) a combination of any two or more of (a) - (d).
(145) Embodiment 37: The method of embodiment 35 or 36 wherein sending (Fig. 6, step 4) the PDU session modification request toward the UE (112) comprises sending (Fig. 6, step 4) a second message comprising the PDU session modification request to the first NF.
(146) Embodiment 38: The method of any of embodiments 35 to 37 wherein the first NF is an AMF and the second NF is an SMF.
(147) Embodiment 39: A network node that implements a NF in accordance with the method of any of embodiments 31 to 38.
(148) Embodiment 40: A method performed by a User Equipment, UE, (112), the method comprising: receiving (Fig. 6, step 5a) a first message from a network function, NF, wherein the first message initiates transfer of one or more Protocol Data Unit, PDU, sessions of the UE (112) from the first network slice to a second network slice; and performing one or more actions to effect transfer of the one or more PDU sessions from the first network slice to the second network slice responsive to the PDU session modification request.
(149) Embodiment 41: A UE adapted to perform the method of embodiment 40.

(150) Those skilled in the art will recognize improvements and modifications to the embodiments of the present disclosure. All such improvements and modifications are considered within the scope of the concepts disclosed herein.

## Claims

1. A method performed by a Session Management Function, SMF, associated with a first network slice in a core network (110) of a cellular communications system (100), the method comprising:
receiving, from an Access and Mobility Management Function, AMF, a first message that initiates transfer of one or more Protocol Data Unit, PDU, sessions of a User Equipment, UE, (112) from the first network slice to a second network slice,
determining that Session and Service Continuity, SSC, mode 3 logic can be used by the UE; and
sending toward the UE (112), a session management message that causes the transfer of the one or more PDU sessions of the UE (112) from the first network slice to the second network slice.

2. The method of claim 1, wherein the session management message comprises information that indicates that Session and Service Continuity mode 3 logic can be used.

3. The method of claim 1 or 2, wherein the session management message comprises information that indicates the second network slice.

4. The method of any of claims 1 to 3, wherein the first message further comprises information that indicates the first network slice.

5. The method of any of claims 1 to 4 wherein the first message further comprises:
information that indicates whether the transfer of the one or more PDU sessions from the first network slice to the second network slice is to be performed immediately or at a scheduled time.

6. The method of any of claims 1 to 4 wherein:
{i} sending (Fig. 6, step 4) the session management message toward the UE (112) comprises sending (Fig. 6, step 4) a second message comprising the session management message to the AMF; and/or
{ii}wherein the first message is a Nsmf_PDUSession_UpdateSMContext Request; and/or
{iii} wherein the session management message is a PDU session modification request.

7. A method performed by a Session Management Function, SMF, associated with a first network slice in a core network (110) of a cellular communications system (100), the method comprising:
receiving from an Access and Mobility Management Function, AMF, a first message that initiates transfer of one or more Protocol Data Unit, PDU, sessions of a User Equipment, UE, (112) from the first network slice to a second network slice,
sending toward the UE (112), a session management message wherein the session management message comprises information that indicates the second network slice and information that indicates that Session and Service Continuity, SSC, mode 3 logic can be applied.

8. The method of claim 7 wherein the first message further comprises information that indicates the first network slice.

9. The method of claim 7 or 8 wherein the first message further comprises:
information that indicates whether the transfer of the one or more PDU sessions from the first network slice to the second network slice is to be performed immediately or at a scheduled time.

10. The method of any of claims 7 to 9 wherein:
{i} sending (Fig. 6, step 4) the session management message toward the UE (112) comprises sending (Fig. 6, step 4) a second message comprising the session management message to the AMF; and/or
{ii}wherein the first message is a Nsmf_PDUSession_UpdateSMContext Request; and/or
{iii} wherein the session management message is a PDU session modification request.

11. A network node (700) for implementing a Session Management Function, SMF, associated with a first network slice in a core network (110) of a cellular communications system (100), the network node (700) comprising processing circuitry (704; 804) configured to cause the network node (700) to perform the method of any of claims 1 to 9.
